# EUROPÄISCHE PATENTANMELDUNG

(11) **EP 4 108 093 A1**
(43) Veröffentlichungstag der Anmeldung: **28.12.2022**
(21) Anmeldenummer: 21180947.0
(22) Anmeldetag: 22.06.2021
(51) Int. Cl.: A23F 5/10

(54) **AUSGASUNGSANORDNUNG FÜR FRISCH GERÖSTETEN KAFFEE SOWIE VERFAHREN ZUM LAGERN VON FRISCH GERÖSTETEM KAFFEE**

(71) Anmelder: PROBAT-WERKE VON GIMBORN MASCHINENFABRIK GMBH, 46446 Emmerich (DE)
(72) Erfinder: Koziorowski, Thomas, 46446 Emmerich (DE); Elshoff, Thomas, 46446 Emmerich (DE)
(74) Vertreter: terpatent Patentanwälte ter Smitten Eberlein-Van Hoof Rütten Daubert

(57) **Zusammenfassung**

Ausgasungsanordnung für frisch gerösteten Kaffee (6) mit einem Behälterorgan (4), in dem der Kaffee (6) gelagert ist, das zumindest eine Einlass- bzw. eine Auslassöffnung (8, 10) aufweist, wobei zumindest eine CO₂-Sensoranordnung (32) mit zumindest einer Auswerteanordnung (14) für den CO₂-Gehalt eines dem Behälterorgan (4) entnommenen Analysegases zur Überwachung eines Ausgasungsprozesses vorgesehen ist, wobei eine Inertgas-Zuführanordnung (62) am Behälterorgan (4) vorgesehen ist, wobei die Inertgas-Zuführanordnung (62) mindestens zwei Inertgas-Zuführebenen (68, 70, 72, 74) mit mindestens jeweils einem Inertgas-Zuführorgan (82; 20, 84; 86, 88; 90) aufweist.

## Beschreibung

Die Erfindung betrifft eine Ausgasungsanordnung für frisch gerösteten Kaffee mit einem Behälterorgan, in dem der Kaffee gelagert ist, dass zumindest eine Einlass- bzw. eine Auslassöffnung aufweist, wobei zumindest eine CO₂ Sensoranordnung mit zumindest einer Auswerteanordnung für den CO₂ Gehalt eines dem Behälterorgan entnommenen Analysegases zur Überwachung eines Ausgasungsprozesses vorgesehen ist, wobei ein Inertgas-Zuführanordnung am Behälterorgan vorgesehen ist. Die Erfindung betrifft ebenfalls ein Verfahren zum Lagern von frisch geröstetem Kaffee in einer derartigen Ausgasungsanordnung.

Es ist bekannt, frisch gerösteten Kaffee in Bohnenform oder auch gemahlen für einen bestimmten Zeitraum zu lagern, bevor der Kaffee in geeigneter Form verpackt wird. Diese "Lagerung" dient der Ausgasung eines Gasgemisches, wobei das CO₂-Gas als Leitgröße dient, welches Gasgenmisch während des Röstprozesses entstanden ist, wodurch die Kaffeezellen unter einem gewissen Druck stehen. Je nach Röstverfahren, Kaffeesorte, Kaffeezustand (gemahlen oder in Bohnenform) und bei gemahlenem Zustand dem Mahlgrad, ist die Gasentwicklung im Kaffee unterschiedlich ausgeprägt, so dass auch der Ausgasungsvorgang unterschiedlich ausgeprägt ist. Ein zu hoher Restgehalt an CO₂ im Kaffee könnte ein Bersten der jeweiligen Verpackungsart, beispielsweise Tüte, Dose oder auch Kapsel, bewirken. Um die Ausgangszeit zu verkürzen, ist es bekannt, die Ausgasung in einem unter Vakuum stehenden Behälterorgan ablaufen zu lassen. Es ist auch bekannt, auch bei

Überschreitung eines gewissen O₂-Gehaltes, ein Inertgas dem Behälterorgan zuzuführen und CO₂-Gas abzuführen. Eine derartige Anordnung bzw. ein derartiges Verfahren ist in der US-amerikanischen Patentschrift US 10,314,319 B2 beschrieben. Hierdurch soll gewährleistet werden, dass der Ausgasungsprozess beschleunigt stattfinden kann und demzufolge nach Ablauf einer möglichst kurzen Zeitspanne der Kaffee der weiteren Verpackung zugeführt werden kann. Es hat sich jedoch nun herausgestellt, dass dieser Erfahrungswert zur Ausgasungsdauer zu wesentlich größeren Unterschieden bei der Kaffeequalität des zu verpackenden Kaffees führt als bisher angenommen. Gründe hierfür können unterschiedliche Umgebungsfaktoren, wie zum Beispiel Temperatur oder auch Feuchtegehalt sein. Zudem ist das Ermitteln dieser Erfahrungswerte für die unterschiedlichen Kaffeezustände sehr aufwendig und damit teuer.

Aufgabe der vorliegenden Erfindung ist es daher, die oben genannten Nachteile auf einfache und kostengünstige Weise zu vermeiden.

Diese Aufgabe wird dadurch gelöst, dass die Inertgas-Zuführanordnung mindestens zwei Inertgas-Zuführebenen mit mindestens jeweils einem Inertgas-Zuführorgan aufweist. Durch eine derartige Ausgasungsanordnung ist es möglich, den Ausgasungsprozess individuell, abgestimmt auf den Kundenwunsch, zu beenden. Auch sind exakt wiederholbare Kaffeezustände, zumindest hinsichtlich des CO₂-Gehaltes, möglich.

In einer besonders vorteilhaften Ausführungsform sind mindestens drei Inertgas-Zuführebenen vorgesehen, wobei eine Zuführebene in einem Bodenteil unterhalb eines Austragbodens des Kaffees, mindestens eine Zuführebene in einem Mantelteil und eine Zuführebene in einem Oberteil des Behälterorgans vorgesehen sind. Hierbei weist die mindestens eine Zuführebene im Mantelteil zwei Zuführorgane auf.

In besonders vorteilhafter Weise weist jede Zuführebene eine Leitungsanordnung mit jeweils einem Ventil, einem Durchflussregler und einem Durchflussmesser auf.

Auch ist es vorteilhaft, wenn die Zuführorgane als Begasungslanzen ausgebildet sind.

Um den Ausgasungsprozess weiter zu optimieren, kann in der Auswerteanordnung ein CO₂-Endwert für den CO₂-Gehalt hinterlegt sein, mit dem der jeweilige aktuell gemessene CO₂-Gehalt vergleichbar ist, derart, dass bei Erreichen des CO₂-Endwertes der Ausgasungsprozess zu beenden ist.

In einer besonders vorteilhaften Ausführungsform weist die Sensoranordnung eine Analyselanze auf, die in das Behälterorgan hinein reicht und die fluidisch über eine Absaugleitung mit einer außerhalb des Behälterorgans, angeordneten Transmitterbox verbunden ist, wobei in der Transmitterbox zumindest eine Ansaugpumpe und ein CO₂-Sensororgan vorgesehen sind, wobei die Transmitterbox kabellos oder kabelgebunden mit einer Steuereinrichtung verbunden ist. Durch eine derartige Analyselanze ist es möglich, dass Analysegas zentral aus dem Behälterorgan abzusaugen, wodurch wesentlich genauere Messwerte ermittelt werden können. Anstatt einer Analyselanze ist es auch möglich andere Hilfsmittel bei der Sensoranordnung einzusetzen. So kann auch ein halboffenes Rohr als Absaugmittel dienen. Wichtig ist auf jeden Fall, dass die Absaugung zentral im Behälterorgan stattfindet. Hierbei ist es besonders vorteilhaft, wenn die Analyselanze in einem unteren oder mittleren Bereich des Behälterorgans vorgesehen ist, derart, dass die Analyselanze in den Kaffee hinein reicht. Durch eine derartige Messung in der Kaffeesäule kann eine hohe Konzentration (in Volumen-%) des CO₂-Gehaltes erfasst werden. Äußere Einflüsse werden auf diese Weise so gut wie vollständig vermieden.

Um die Randbedingung für die Ausgasung durch das entnommene Analysegas nicht zu ändern, kann es vorteilhaft sein, eine Rückführleitung zur Rückführung des Analysegases von der Transmitterbox in das Behälterorgan vorzusehen. In besonders vorteilhafter Weise ist in der Transmitterbox ein O₂-Sensororgan zur Messung des O₂-Gehaltes vorgesehen. In vorteilhafter Weise ist ein Ablassorgan, insbesondere ein Ventil, am Behälterorgan vorgesehen, um Gas abzulassen. In besonders vorteilhafter Weise kann eine Begasungslanze als Analyselanze ausgebildet sein.

Eine besonders komfortable Ausgasungsanordnung wird dadurch bereitgestellt, dass in der Auswerteanordnung unterschiedliche CO₂-Zeit-Diagramme für unterschiedliche Kaffeezustände, wie zum Beispiel unterschiedliche Kaffeesorten, Röstgrade, Röstzeiten, Mahlgrad, etc. hinterlegt sind. Eine derartige Ausgasungsanordnung ist insbesondere für eine automatisierte Kaffeebearbeitung geeignet, bei der das jeweilige Behälterorgan durch eine Steuereinheit automatisch entleert wird. Die Auswerteanordnung ist dann auf bekannte Weise steuerungstechnisch mit der Steuereinheit zu verbinden.

Die Aufgabe wird ebenfalls durch ein Verfahren zum Lagern von frisch geröstetem Kaffee, das heißt in Form von Kaffeebohnen oder Mahlkaffee, in einer derartigen Ausgasungsanordnung gelöst, wobei Kaffee in das Behälterorgan eingefüllt wird, der Ausgasungsprozess mittels der Auswerteanordnung überwacht wird und wobei der Ausgasungsprozess und damit ein Lagerprozess beendet wird, sobald ein vordefinierter CO₂-Endwert in einem vordefinierten (Zeit)-bereich erreicht wird. Hierbei kann der (Zeit)-bereich mit der maximal möglichen Dauer des Lagerprozesses übereinstimmen. Im Falle einer stark ansteigenden CO₂-Ausgasung und einem nachfolgenden Abfall des CO₂-Gehaltes ist der Zeitbereich jedoch im Bereich des Abfalles des CO₂-Gehaltes zu wählen, um sicher zu stellen, dass der Lagerprozess nicht zu früh (bei Ansteigen des CO₂-Gehaltes) beendet wird.

Die Erfindung wird anhand einer Zeichnung näher erläutert, hierbei zeigt:
Figur 1 eine schematische Ansicht einer erfindungsgemäß Ausgasungsanordnung, und
Figur 2 ein Diagramm, bei dem ein CO₂- bzw. O₂-Gehalt gegenüber der Zeit von gemahlenem Kaffee in einer erfindungsgemäßen Ausgasungsanordnung dargestellt ist.

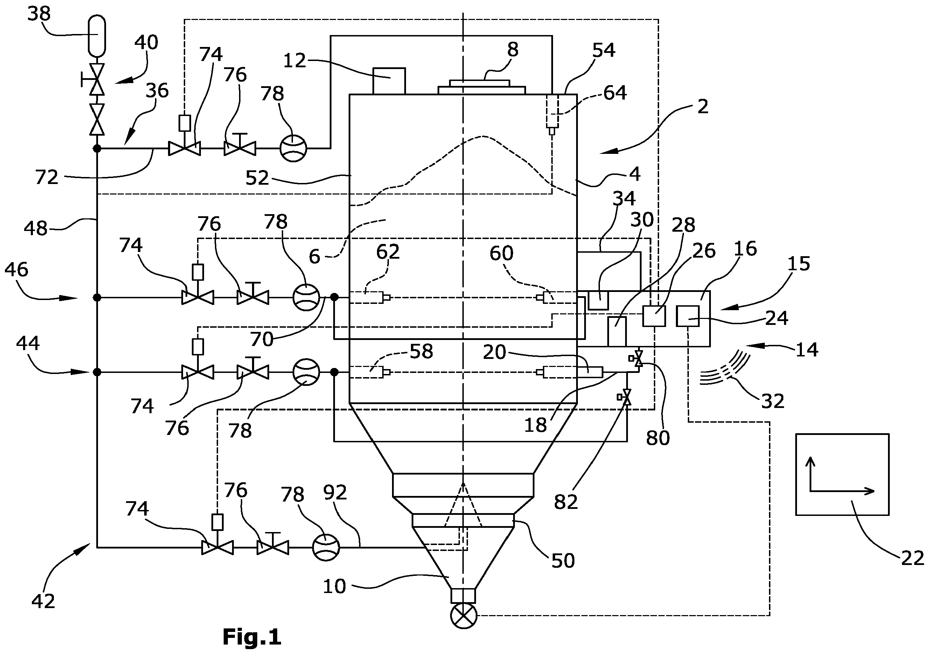

Figur 1 zeigt eine schematische Ansicht einer erfindungsgemäßen Ausgasungsanordnung 2. Diese Ausgasungsanordnung 2 weist ein Behälterorgan 4 auf, das im vorliegenden Ausführungsbeispiel mit frisch geröstetem und gemahlenem Mahlkaffee 6 befüllt ist. Im vorliegenden Ausführungsbeispiel erfolgte die Befüllung mit dem Mahlkaffee 6 zu 3/4 des Volumens des Behälterorgans 4, um Behältervolumen für einen Ausgasungsprozess des Mahlkaffees vorzuhalten. Auf bekannte Weise besitzt das Behälterorgan 4 eine Einlassöffnung 8, durch die der auszugasende Kaffee 6 in das Behälterorgan 4 gefüllt wird und eine Auslassöffnung 10, durch die eine Entleerung des Behälterorgans 4 stattfindet. Es sollte deutlich sein, dass Einlass- und Auslassöffnungen 8, 10 auch übereinstimmen können.

Die vorliegende Ausgasungsanordnung 2 besitzt im vorliegenden Ausführungsbeispiel ein Ablassorgan 12, durch das bei einem zu hohen Druck Gas, im wesentlichen CO₂, aus dem Behälterorgan 4 abgelassen wird. Im vorliegenden Ausführungsbeispiel weist die Ausgasungsanordnung 2 ein bis zu einem bestimmten Druck dichtes Behälterorgan 4 auf. Ein Druckausgleich kann hier durch das Ablassorgan 12, das als federbelastetes Ventil ausgebildet ist, erfolgen. Es ist jedoch auch denkbar, dass dem Behälterorgan 4 in regelmäßigen Abständen auf bekannte Weise Inertgas zugeführt wird und im Wesentlichen CO₂-Gas abgelassen wird.

Im vorliegenden Fall weist eine Auswerteanordnung 14 eine CO₂- /O₂-Sensoranordnung 15 auf, die eine Transmitterbox 16 aufweist, in die ein Analysegas über eine Absaugleitung 18 mittels einer Analyselanze 20 angesaugt wird. Die Analyselanze 20 reicht hierbei in den Kaffee 6 hinein. Die Transmitterbox 16 ist im vorliegenden Ausführungsbeispiel kabellos mit einer Steuereinrichtung 22 verbunden. In der Transmitterbox ist ein CO₂- Sensororgan 24 zur Messung des CO₂-Gehaltes, ein O₂-Sensororgan 26 zur Messung des O₂-Sensorgehaltes, eine als Membranpumpe 28 ausgeführte Ansaugpumpe zur Ansaugung des Analysegases sowie ein Interface 30 zur kabellosen Übermittlung der Messergebnisse an die Steuereinrichtung 22 vorgesehen. Die kabellose Verbindung ist hier mit dem Bezugszeichen 32 versehen. Es sollte deutlich sein, dass auch eine konventionelle, kabelgeführte Übertragung möglich ist. Eine CO₂- /O₂-Sensoranordnung 15 besteht also im vorliegenden Ausführungsbeispiel aus den Bauteilen Absaugleitung 18, Analyselanze 20 sowie CO₂-Sensororgan 24. Wie bereits erwähnt, reicht die Analyselanze 20, um ein optimales Messergebnis zu erhalten, im unteren Bereich des Behälterorgans 4 in den Kaffee hinein. Es ist jedoch auch denkbar, das Sensororgan 24 im oberen Bereich des Behälterorgans 4, also in dem Bereich, in dem kein Kaffee gelagert ist, auf geeignete Weise ein Analysegas ansaugen zu lassen.

Um das Messergebnis, insbesondere bei einem bis zu einem bestimmten Druck dichten Behälterorgan 4, wie im vorliegenden Fall, nicht zu verfälschen, ist eine Rückführleitung 34 für das Analysegas vorgesehen, die das Analysegas von der Transmitterbox 16 mittels der Membranpumpe 28 wieder zurück in das Behälterorgan 4 führt. Bei einer hier nicht dargestellten Ausführungsform eines Behälterorgans 4.

Durch diese Gegenüberstellung sollte deutlich sein, wie beispielsweise variierende Umgebungsbedingungen, wie z.B. Temperaturen, sich auf das Entgasungsverhalten auf die Dauer der Entgasungszeit auswirken. Ebenso können sich auch Änderungen oder Schwankungen am Produkt selbst auf die Zeit auswirken. Dies kann durch die erfindungsgemäße Anordnung dokumentiert und angepasst werden, so dass eine gleichbleibende Qualität vom Endprodukt gewährleistet ist.

Wie bereits angesprochen, kann der Ausgasungsprozess durch eine Inertgaszuführung weiter optimiert und damit wesentlich verkürzt werden. Hierzu ist erfindungsgemäß, wie in Figur 1 dargestellt, eine Inertgas-Zuführanordnung 36 vorgesehen, die zunächst einen Inertgas-Tank 38, hier ein N₂-Tank, und eine Ventilanordnung 40 aufweist. Des Weiteren sind im vorliegenden Ausführungsbeispiel vier Inertgas-Zuführebenen 42, 44, 46, 48 vorgesehen. Die erste Inertgas-Zuführebene 42 ist hierbei in einem Bodenteil 50, die zweite und dritte Inertgas-Zuführebene 44, 46 in einem Mantelteil 52 und die letzte, hier vierte Inertgas-Zuführebene 48 in einem Oberteil 54 des Behälterorgans 4 vorgesehen. Hierbei sind ein Inertgas-Zuführorgan 56 im Bodenteil 50 unterhalb eines Austragbodens des Kaffees, jeweils zwei Inertgas-Zuführorgane 20, 58; 60, 62 in der zweiten und dritten Zuführebene 44, 46 im Mantelteil 52 und ein Inertgas-Zuführorgan 64 im Oberteil 54 des Behälterorgans 4 vorgesehen. Jede Inertgas-Zuführebenen 42, 44, 46, 48 besitzt hierbei eine Leitungsanordnung 66, 68, 70, 72 mit jeweils einem Ventil 74, einem Durchflussregler 76 und einem Durchflussmesser 78. Diese dienen dazu, die Begasung in optimaler und effizienter Weise zu steuern.

So kann das Behälterorgan 4 vor der Befüllung mit Kaffee gespült werden. Hierbei wird mit der Begasung durch die erste Zuführebene 42 begonnen und dann die nachfolgenden Zuführebenen 44, 46, 48 in aufsteigender Reihenfolge hinzu geschaltet. Auf diese Weise kann Inertgas gespart werden. Nachdem das Behälterorgan 4 mit Kaffee 6 befüllt wurde, wird wieder eine Begasung beginnend mit der ersten Inertgas-Zuführebene 42 vorgenommen, um den Sauerstoff O₂ über die ganze Kaffeesäule auszutragen.

Ergibt die Analyse, dass ein Sauerstoffwert von 2% überschritten wird, werden die Begasungsventile solange geöffnet, bis dieser Wert von 2% wieder unterschritten wird. Hierbei kann der O₂-Messwert gezielt genutzt werden, um die verschiedenen Inertgas-Zuführebenen 42, 44, 46, 48 anzusteuern.

Beim Entleerungsvorgang wird nur die letzte Zuführebene 48, hier die vierte Zuführebene 48 aktiviert, um eine Ansaugung von Umgebungsluft zu vermeiden.

Selbstverständlich kann die Analyselanze 20 als eigenes, unabhängiges Bauteil ausgeführt werden. Im vorliegenden Ausführungsbeispiel ist jedoch die Analyselanze 20 gleichzeitig als Begasungslanze der zweiten Zuführebene 44 ausgebildet. Um diese Doppelfunktion einwandfrei ausüben zu können, ist in der Leitungsanordnung und in der Ansaugleitung 18 jeweils ein Magnetventil 80, 82 vorgesehen. Auch ist die Analyselanze 20 derart ausgeführt, hier in Form eines Sinterkopfes, dass kein Kaffee abgesaugt wird. Die Einbautiefen der Lanzen sind in Figur 1 lediglich schematisch dargestellt. Sie reichen in Wirklichkeit viel geringer in das Behälterorgan 4 hinein.

Es sollte darüberhinaus deutlich sein, dass sämtliche Ventile, Durchflussregler und Durchflussmesser steuerungstechnisch mit der Steuereinrichtung 22 verbunden sind.

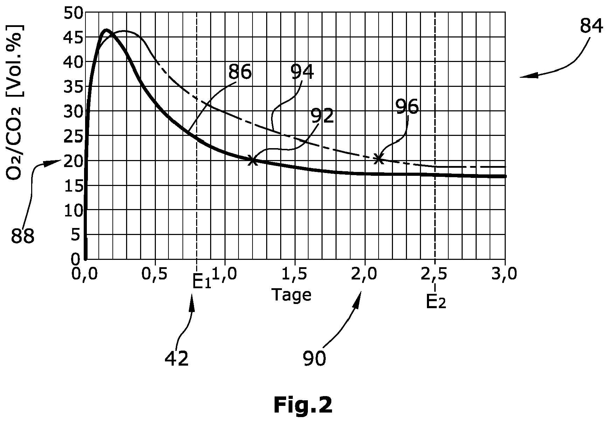

Um nun den optimalen Zeitpunkt zur Beendigung des Ausgasungsprozesses zu bestimmen, ist in der Steuereinrichtung 22 und damit in der Auswerteanordnung 14 ein CO₂- /O₂-Zeitdiagramm 84 (siehe hierzu Figur 2) und hierbei eine Kurve 86 für den entsprechenden Kaffee bei erfindungsgemäßer Inertgaszuführung hinterlegt. Diese Kurve 86 entspricht dem optimalen CO₂-Verlauf für den zu lagernden Kaffee unter den vor Ort bestehenden Randbedingungen. Bei Erreichen eines gewählten CO₂-Gehalt-Endwert 88, hier in Höhe von 20 Volumen-%, der hier für einen gewissen Zeitbereich 90 hinterlegt ist und beim Punkt 92 erreicht wird, kann dann der Entgasungsprozess beendet werden. Der Zeitbereich 90 (zwischen 0,8 und 2,5 Tage) wurde hier so ausgewählt, dass der CO₂-Gehalt-Endwert 88 auf jeden Fall beim Abfallen der CO₂-Gehalt-Kurve 86 ermittelt wird.

Mit 94 ist hier in strichpunktierter Form eine zweite Kurve für den CO₂-Verlauf der gewählten Kaffeesorte dargestellt. Diese Kurve 94 verläuft im Wesentlichen versetzt zur ersten Kurve 86 und beschreibt einen CO₂-Verlauf der unter nicht optimierter Inertgaszuführung abläuft. Deutlich zu erkennen ist hier, dass ein Zeitpunkt 96, zu dem der CO₂-Endwert erreicht wird, sehr viel später, nämlich ca. 0,9 Tage später eintritt, als beim Verlauf gemäß der Kurve 86. Durch die Erfindung kann die Entgasung also wesentlich verkürzt werden.

## Patentansprüche

1. Ausgasungsanordnung für frisch gerösteten Kaffee (6) mit einem Behälterorgan (4), in dem der Kaffee (6) gelagert ist, das zumindest eine Einlass- bzw. eine Auslassöffnung (8, 10) aufweist, wobei zumindest eine CO₂-Sensoranordnung (32) mit zumindest einer Auswerteanordnung (14) für den CO₂-Gehalt eines dem Behälterorgan (4) entnommenen Analysegases zur Überwachung eines Ausgasungsprozesses vorgesehen ist, wobei eine Inertgas-Zuführanordnung (36) am Behälterorgan (4) vorgesehen ist, **dadurch gekennzeichnet, dass** die Inertgas-Zuführanordnung (36) mindestens zwei Inertgas-Zuführebenen (42, 44, 46, 48) mit mindestens jeweils einem Inertgas-Zuführorgan (56; 20, 58; 60, 62; 64) aufweist.

2. Ausgasungsanordnung nach Anspruch 1, **dadurch gekennzeichnet, dass** mindestens drei Inertgas-Zuführebenen (42, 44, 46, 48) vorgesehen sind, wobei eine Zuführebene (42) in einem Bodenteil (50) unterhalb eines Austragbodens des Kaffees (6), mindestens eine Zuführebene (44, 46) in einem Mantelteil (52) und eine Zuführebene (48) in einem Oberteil (54) des Behälterorgans (4) vorgesehen sind.

3. Ausgasungsanordnung nach Anspruch 2, **dadurch gekennzeichnet, dass** die mindestens eine Zuführebene (44, 46) im Mantelteil (52) zwei Zuführorgane (20, 58; 60, 62) aufweist.

4. Ausgasungsanordnung nach einem der vorhergehenden Ansprüche, **dadurch gekennzeichnet, dass** jede Zuführebene (42, 44, 46, 48) eine Leitungsanordnung (66, 68, 70, 72) mit jeweils einem Ventil (74), einem Durchflussregler (76) und einem Durchflussmesser (78) aufweist.

5. Ausgasungsanordnung nach einem der vorhergehenden Ansprüche, **dadurch gekennzeichnet, dass** die Zuführorgane (56, 20, 58, 60, 62, 64) als Begasungslanzen ausgebildet sind.

6. Ausgasungsanordnung nach einem der vorhergehenden Ansprüche, **dadurch gekennzeichnet, dass** in der Auswerteanordnung (14) ein CO₂-Endwert für den CO₂-Gehalt hinterlegt ist, mit dem der jeweilige aktuell gemessene CO₂-Gehalt vergleichbar ist, derart, dass bei Erreichen des CO₂-Endwertes (88) der Ausgasungsprozess zu beenden ist.

7. Ausgasungsanordnung nach einem der vorhergehenden Ansprüche, **dadurch gekennzeichnet, dass** die Sensoranordnung (32) eine Analyselanze (20) aufweist, die in das Behälterorgan (4) hineinreicht und die fluidisch über eine Absaugleitung (18) mit einer außerhalb des Behälterorgans (4) angeordneten Transmitterbox (16) verbunden ist, wobei in der Transmitterbox (16) zumindest eine Ansaugpumpe (28) und ein CO₂-Sensororgan (24) vorgesehen sind, wobei die Transmitterbox (16) kabellos oder kabelgebunden mit einer Steuereinrichtung (22) verbunden ist.

8. Ausgasungsanordnung nach Anspruch 7, **dadurch gekennzeichnet, dass** die Analyselanze (20) in einem unteren oder mittleren Bereich des Behälterorgans (4) vorgesehen ist, derart, dass die Analyselanze (20) in den Kaffee hineinreicht.

9. Ausgasungsanordnung nach einem der Ansprüche 2 oder 3, **dadurch gekennzeichnet, dass** eine Rückführleitung (34) zur Rückführung des Analysegases von der Transmitterbox (16) in das Behälterorgan (4) vorgesehen ist.

10. Ausgasungsanordnung nach einem der Ansprüche 2 - 4, **dadurch gekennzeichnet, dass** in der Transmitterbox (16) ein O₂-Sensororgan (26) zur Messung des O₂-Gehaltes vorgesehen ist.

11. Ausgasungsanordnung nach einem der vorhergehenden Ansprüche, **dadurch gekennzeichnet, dass** ein Ablassorgan (12) am Behälterorgan (4) vorgesehen ist.

12. Ausgasungsanordnung nach einem Ansprüche 7 - 11, **dadurch gekennzeichnet, dass** eine Begasungslanze (20) als Analyselanze ausgebildet ist.

13. Ausgasungsanordnung nach einem der Ansprüche 7 - 12, **dadurch gekennzeichnet, dass** in der Auswerteanordnung (14) unterschiedliche CO₂-Zeit-Diagramme für unterschiedliche Kaffeezustände, wie z. B. unterschiedliche Kaffeesorten, Kaffeebohnen, Mahlkaffee, Mahlgrad, etc., hinterlegt sind.

14. Verfahren zum Lagern von frisch geröstetem Kaffee, das heißt in Form von Kaffeebohnen oder Mahlkaffee, in einer Ausgasungsanordnung nach einem der vorhergehenden Ansprüche, **dadurch gekennzeichnet, dass** Kaffee (6) in das Behälterorgan (4) eingefüllt wird, der Ausgasungsprozess mittels der Auswerteanordnung (14) überwacht wird und wobei der Ausgasungsprozess und damit ein Lagerprozess beendet wird, sobald ein vordefinierter CO₂-Endwert (88) in einem vordefinierten Zeitbereich (90) erreicht wird.
